# EUROPÄISCHE PATENTSCHRIFT

(11) **EP 1 608 478 B1**
(45) Veröffentlichungstag und Bekanntmachung des Hinweises auf die Patenterteilung: **27.02.2008**
(21) Anmeldenummer: 04724566.7
(22) Anmeldetag: 31.03.2004
(51) Int. Cl.: B23B 51/04, B23B 29/03

(54) **WERKZEUG FÜR WERKZEUGMASCHINEN**
TOOL FOR MACHINE TOOLS
OUTIL POUR MACHINES-OUTILS

(30) Priorität: 01.04.2003 DE 10314889
(43) Veröffentlichungstag der Anmeldung: 28.12.2005
(73) Patentinhaber: KOMET GROUP Holding GmbH, 74354 Besigheim (DE)
(72) Erfinder: HEILMANN, Jürgen, 74391 Erligheim (DE); KRETZSCHMANN, Uwe, 74321 Bietigheim-Bissingen (DE); LEUZE, Peter, 74399 Walheim (DE)
(74) Vertreter: Wolf, Eckhard
(86) Internationale Anmeldenummer: PCT/EP2004/003386
(87) Internationale Veröffentlichungsnummer: WO 2004/087355

(56) Entgegenhaltungen:
- DE-A- 4 214 528
- US-A- 4 194 862
- US-A- 6 012 881
- US-B1- 6 485 235

## Beschreibung

Die Erfindung betrifft ein Werkzeug für Werkzeugmaschinen mit einem Schaft und einem stirnseitig am Schaft abnehmbar angeordneten, vorzugsweise als Bohrkrone ausgebildeten Schneidenträger, der an seinem einen Ende eine über eine Planfläche überstehende, in eine von einer ebenen Gegenfläche begrenzte Aufnahme des Schafts einführbare, mittels Spannschrauben festklemmbare Querrippe sowie einen in ein zentrales Passloch des Schafts einsteckbaren, über die Querrippe achszentral überstehenden Zentrierzapfen aufweist, wobei der Schneidenträger und der Schaft je zwei ineinander übergehende, vorzugsweise wendelförmige Spanabführnuten aufweisen.

Es ist ein Bohrwerkzeug dieser Art bekannt (DE-A-4214528), bei welchem die am Schneidenträger angeordnete Querrippe in eine stirnseitig am Schaft radial ausgerichtete, beidseitig durch Flanken begrenzte Quernut eingreift und in dieser mittels Spannschrauben, die durch eine der Nutenflanken hindurchgreift, gegen die gegenüberliegende Nutenflanke angepresst sind. Es wird als nachteilig angesehen, dass die Nutenflanken vor allem bei kleineren Schaftdurchmessern relativ dünnwandig sind, so dass nur relativ kleine Drehmomente übertragen werden können. Hinzu kommt, dass die als Druckschrauben ausgebildeten Spannschrauben keine aussteifende Wirkung im Verbindungsbereich aufweisen.

Ausgehend hiervon liegt der Erfindung die Aufgabe zugrunde, das bekannte Maschinenwerkzeug der eingangs angegebenen Art dahingehend zu verbessern, dass die Verbindung zwischen Schaft und Schneidenträger zu einer Vergrößerung der übertragbaren Drehmomente führt.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die erfindungsgemäße Lösung besteht im Wesentlichen darin, dass die Aufnahme zwei durch einen Zentralspalt voneinander getrennte, zweizählig drehsymmetrisch bezüglich der Werkzeugachse zueinander angeordnete, über die Gegenfläche des Schafts im Wesentlichen achsparallel überstehende Mitnehmerpartien aufweist, die jeweils eine in Drehrichtung des Schafts weisende achsparallele Mitnehmerfläche für eine benachbarte Querrippenpartie, eine an diese spitzwinklig anschließende, als Teil des Spanabführkanal ausgebildete, vorzugsweise konkave Spanabführfläche und eine die Mitnehmerfläche und die Spanabführfläche radial außen miteinander verbindende, zur Werkzeugachse vorzugsweise konzentrische teilzylindrische Außenfläche aufweisen, dass die Querrippenpartie auf ihrer der Mitnehmerfläche der einen Mitnehmerpartie abgewandten Seite eine an der konkaven Spanabführfläche der anderen Mitnehmerpartie anschließende und sich mit dieser ergänzende, als Teil des Spanabführkanals ausgebildete, vorzugsweise konkave Spanabführfläche aufweist, und dass die Spannschrauben durch je eine Querbohrung in einer der Mitnehmerpartien hindurch in eine Gewindebohrung der benachbarten Querrippenpartie eingreifen. Mit den erfindungsgemäßen Maßnahmen wird erreicht, dass die Mitnehmerpartien des Schafts ausreichend dickwandig ausgebildet sind, um auch große Drehmomente beim Bohrvorgang aufnehmen zu können. Eine weitere Verbesserung in dieser Hinsicht wird erfindungsgemäß dadurch erzielt, dass die Querrippe über die Spannschrauben gegen die Mitnehmerflächen der benachbarten Mitnehmerpartien angepresst werden.

Eine bevorzugte Ausgestaltung der Erfindung sieht vor, dass die Querbohrungen einen Innenkonus aufweisen, in welchen die einen konischen Senkkopf aufweisenden Spannschrauben unter Erzeugung einer Planflächenverspannung zwischen der Planfläche der Querrippe und der Gegenfläche der Aufnahme einziehbar sind. Dieses Merkmal sorgt für eine zusätzliche Aussteifung der Trennstelle zwischen Schaft und Schneidenträger. Vorteilhafterweise weist der Schneidenträger im Bereich seiner Spanfördernuten je eine Aufnahme für eine Wechselschneide auf. Weiter ist der Schneidenträger zweckmäßig mit einer zentralen Axialbohrung zur Aufnahme eines axial überstehenden Zentrierbohrers versehen. Der Zentrierbohrer ist dabei zweckmäßig über eine schräg in den Schneidenträger eingreifende Stellschraube axial positionierbar und über mindestens eine Querschraube am Schneidenträger fixierbar. Um eine ausreichende Kühlung und Schmierung der Bohrerspitze und eine verbesserte Spanabfuhr zu erreichen, wird gemäß einer bevorzugten Ausgestaltung der Erfindung vorgeschlagen, dass der Zentrierzapfen eine zum Zentrierbohrer führende, über den Schaft mit Kühlschmiermittel beaufschlagbare Zentralbohrung aufweist. Eine weitere Verbesserung in dieser Hinsicht wird dadurch erzielt, dass die Mitnehmerpartien und der Schneidenträger miteinander kommunizierende, über den Schaft mit Kühlschmiermittel beaufschlagbare. Bohrungen aufweisen.

Um auch bei großer Bohrtiefe Durchbohrungen zu ermöglichen, wird gemäß einer vorteilhaften Ausgestaltung der Erfindung vorgeschlagen, dass der Schneidenkörper im Bereich seiner teilzylindrischen Umfangsflächen in axialem Abstand von seiner Stirnfläche zwei in einem Winkelabstand ≠ 180° voneinander angeordnete, radial überstehende Führungselemente aufweist. Zur Kühlung und Schmierung der gegen die Bohrungswand anliegenden Führungselemente werden diese über Zweigbohrungen im Schneidenträger mit Kühlschmiermittel beaufschlagt. Dadurch werden außerdem Späneansammlungen im Bereich der Führungselemente vermieden.

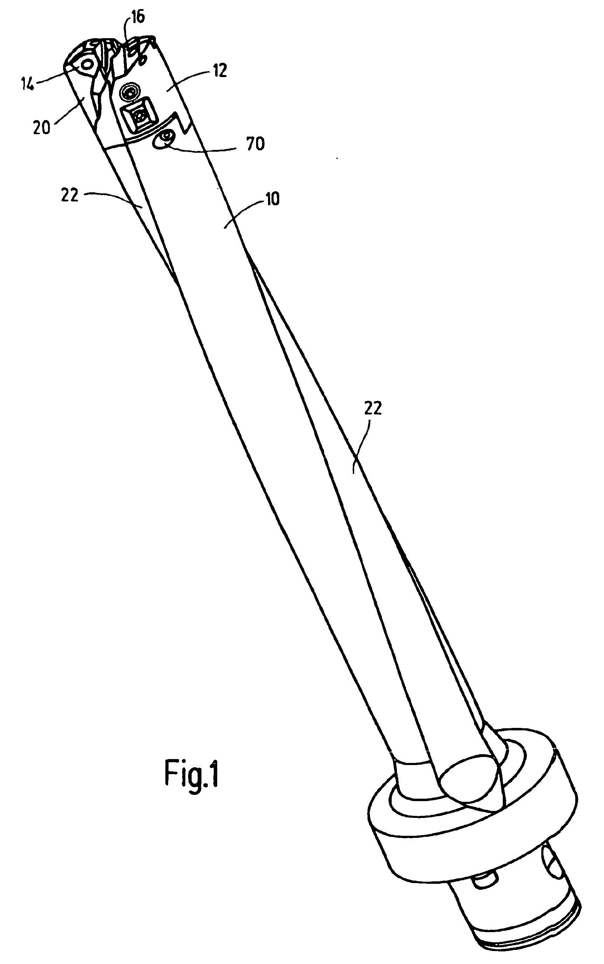

Im Folgenden wird die Erfindung anhand eines in der Zeichnung in schematischer Weise dargestellten Ausführungsbeispiels näher erläutert. Es zeigen
- Fig. 1: eine Seitenansicht eines Bohrwerkzeugs mit langem Schaft und Bohrkrone in schaubildlicher Darstellung;

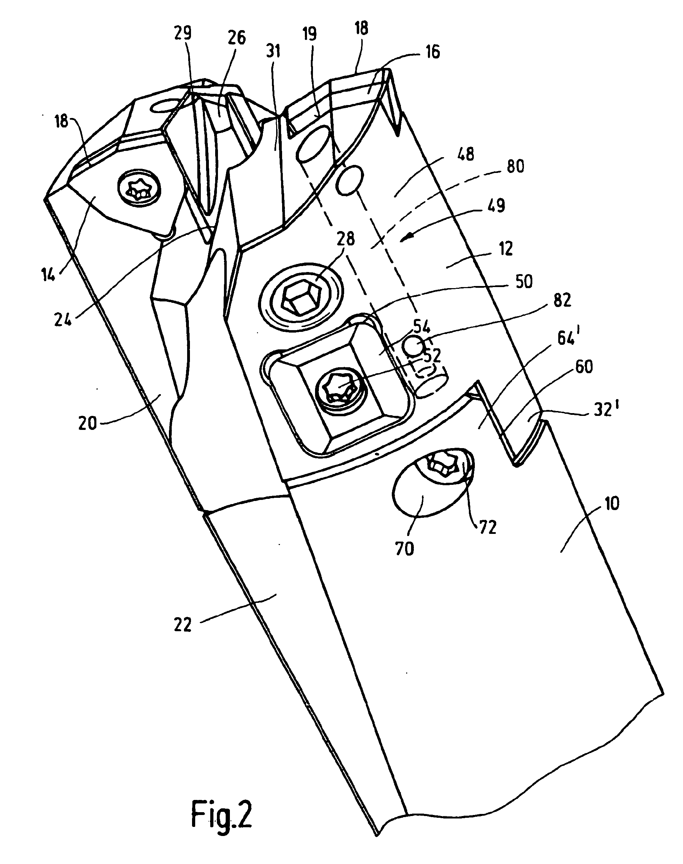

- Fig. 2: einen vergrößerten Ausschnitt aus Fig. 1;

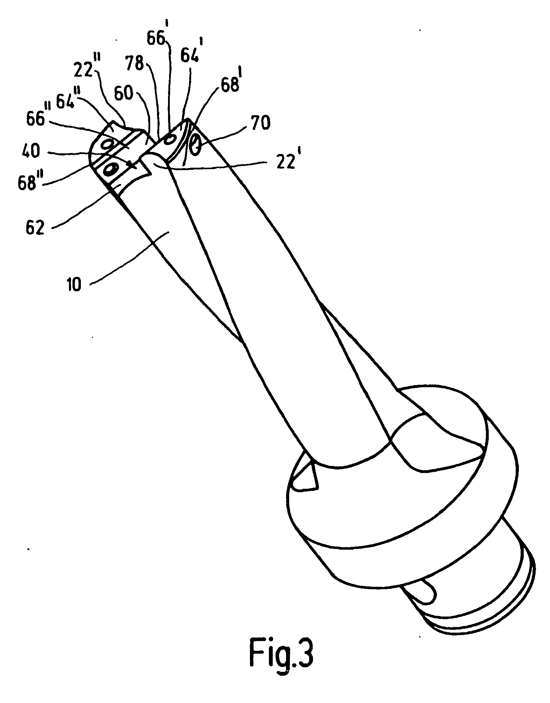

- Fig. 3: den Schaft ohne Bohrkrone in schaubildlicher Darstellung;
- Fig. 4a: bis c drei Seitenansichten der Bohrkrone in verschiedenen D rehstellungen;
- Fig. 5a: und b eine Draufsicht und eine Untenansicht des Schneidenträgers;

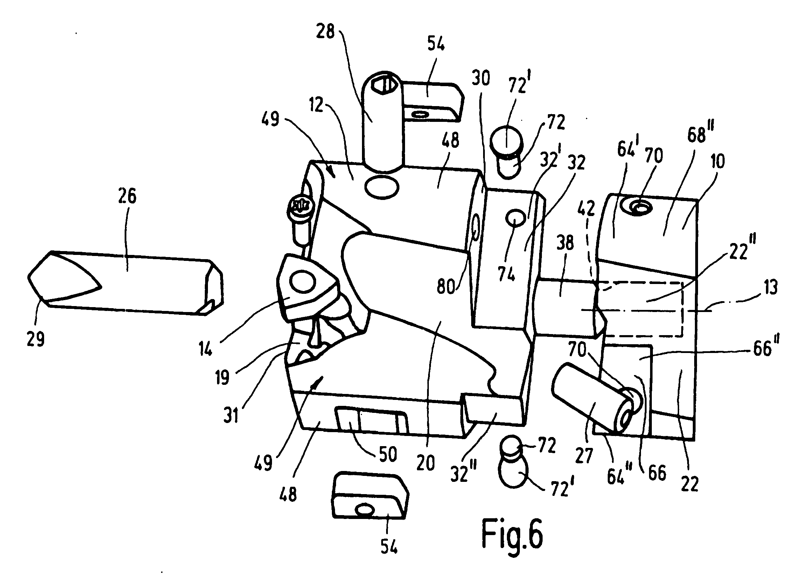

- Fig. 6: eine Seitenansicht des Schneidenträgers mit Schaftspitze in Explosionsdarstellung.

Das in der Zeichnung dargestellte Bohrwerkzeug besteht im Wesentlichen aus einem Schaft 10 und einem stirnseitig mit dem Schaft 10 form- und kraftschlüssig verbundenen, als Bohrkrone 12 ausgebildeten Schneidenträger. Die Bohrkrone 12 weist zwei in verschiedenen radialen Abständen von der Schaftachse 13 angeordnete sechseckige Wendeschneidplatten 14,16 auf, die mit jeweils zwei einen Spitzenwinkel von 120° bis 160° miteinander einschließenden Schneidkanten 18 stirnseitig über die Bohrkrone 12 überstehen. Die Wendeschneidplatten sind so angeordnet, dass sich ihre wirksamen Schneidkanten 18 in ihren Arbeitsbereichen radial teilweise überdecken. Sie sind jeweils in Aussparungen 19 einer achsparallelen Flanke einer Spanabführnut 20 der Bohrkrone 12 angeordnet, die an ihrem rückwärtigen Ende in eine wendelförmig verlaufende Spanabführnut 22 des Schafts 10 mündet. In einer achszentralen Bohrung 24 der Bohrkrone 12 ist zusätzlich ein Zentrierbohrer 26 mittels einer schräg in die Bohrkrone eindrehbaren Verstellschraube 27 axial verstellbar und mittels einer Feststellschraube 28 an der Bohrkrone 12 festlegbar angeordnet, der mit seiner Spitze 29 axial über die Stirnfläche 31 der Bohrkrone 12 und die Schneidkanten 18 der Wendeschneidplatten 14,16 übersteht.

Die Bohrkrone 12 weist rückwärtig eine über eine Planfläche 30 überstehende Querrippe 32 auf, die durch zwei seitliche Flanken 34,34' und eine ebene Stirnfläche 36 begrenzt ist und an deren Stirnflächen 36 mittig ein Passzapfen 38 achszentral übersteht. Der Passzapfen 38 ist bei dem gezeigten Ausführungsbeispiel an der Bohrkrone 12 angeformt. Die Querrippe 32 ist in eine entsprechende, stirnseitig am Schaft 10 angeordnete Aufnahme 40 einsetzbar, während der Passzapfen 38 in eine achszentrale Passbohrung 42 des Schafts eingreift. Die Aufnahme 40 weist zwei durch einen Zentralspalt 60 voneinander getrennte, zweizählig drehsymmetrisch (C₂-Symmetrie) bezüglich der Werkzeugachse 13 zueinander angeordnete, über die Gegenfläche 62 des Schafts 10 im Wesentlichen achsparallel überstehende Mitnehmerpartien 64',64" auf, die jeweils eine in Drehrichtung des Schafts weisende achsparallele Mitnehmerfläche 66',66" für eine benachbarte Querrippenpartie 32',32", eine an diese spitzwinklig anschließende, als Teil des Spanabführkanals ausgebildete konkave Spanabführfläche 22',22" und eine die Mitnehmerfläche und die Spanabführfläche radial außen miteinander verbindende, zur Werkzeugachse konzentrische teilzylindrische Außenfläche 68',68" aufweisen. Jede Querrippenpartie 32',32" weist auf ihrer der Mitnehmerfläche 66',66" der einen Mitnehmerpartie 64',64" abgewandten Seite eine an der konkaven Spanabführfläche der anderen Mitnehmerpartie anschließende und sich mit dieser ergänzende, als Teil des Spanabführkanals 20 ausgebildete konkave Spanabführfläche 20',20" auf. Die Mitnehmerpartien 64',64" weisen jeweils eine Querbohrung 70 auf, durch die hindurch je eine Spannschraube 72 in eine Gewindebohrung 74 der benachbarten Querrippenpartie 32',32" eingreift. Die Querrippe 32 und die Mitnehmerpartien 64',64" werden durch die Spannschrauben 72 gegeneinander gepresst. Zusätzlich weisen die Querbohrungen 70 einen Innenkonus auf, in welchen die einen konischen Senkkopf 72' aufweisende Spannschrauben 72 unter Erzeugung einer Planflächenverspannung zwischen der Stirnfläche 36 der Querrippe 32 und der Gegenfläche 62 der Aufnahme 40 einziehbar sind.

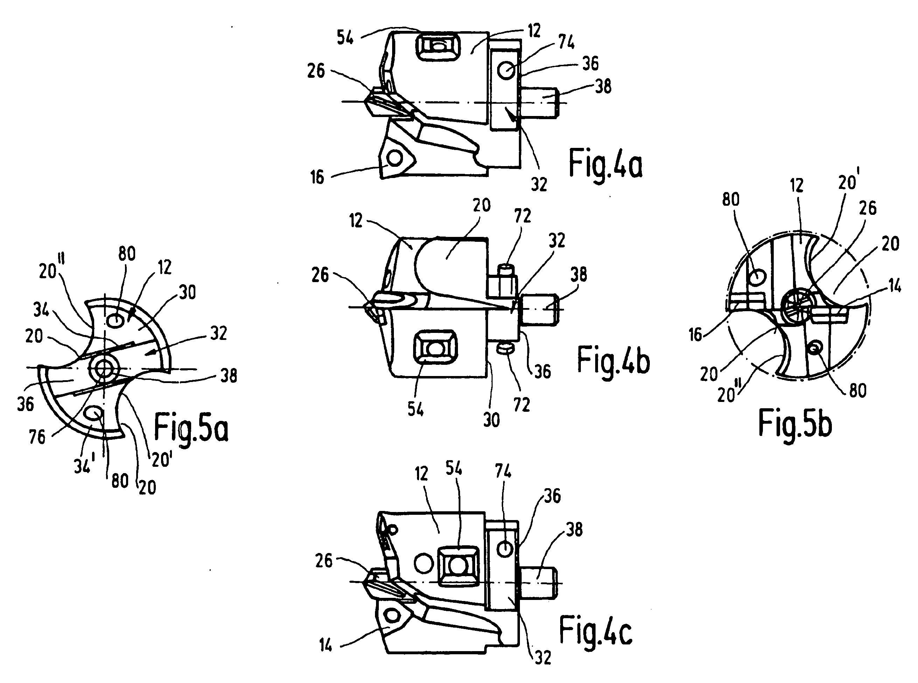

Die Bohrkrone 12 ist durch zwei einander diametral gegenüberliegende Stege 49 mit teilkreisförmigen Umfangsflächen 48 begrenzt, in denen je eine Vertiefung 50 zur Aufnahme eines mittels einer Klemmschraube 52 arretierbaren Führungselements 54 angeordnet ist. Die Führungselemente 54 sind axial gegenüber der Stirnfläche 31 der Bohrkrone zurückversetzt und weisen einen axialen Abstand voneinander auf (vgl. Fig. 4b und c). Ihr gegenseitiger Winkelabstand ist ≠ 180°. Die Führungselemente 54 sind auch gegenüber den Wendeschneidplatten 14,16 in Umfangsrichtung versetzt angeordnet (vgl. Fig. 4a bis c).

Der Passzapfen 38 weist eine zum Zentrierbohrer 26 führende, über den Schaft mit Kühlschmiermittel beaufschlagbare Zentralbohrung 76 auf. Weiter sind die Mitnehmerpartien 64',64" und der Schneidenträger 12 durch miteinander kommunizierende, über den Schaft mit Kühlschmiermittel beaufschlagbare Bohrungen 78,80 verbunden. Die Bohrungen 80 weisen außerdem Zweigbohrungen 82 auf, die in der Nähe je eines der Führungselemente 54 an der Schneidenträgeroberfläche austreten. Durch diese Maßnahmen wird für eine ausreichende Kühlung und Schmierung der Bohrkrone im Bereich der Schneiden und der Führungselemente sowie für eine gute Spanabfuhr gesorgt.

Zusammenfassend ist folgendes festzuhalten: Die Erfindung bezieht sich auf ein Werkzeug mit einem Schaft und einem stirnseitig am Schaft 10 abnehmbar angeordneten, vorzugsweise als Bohrkrone ausgebildeten Schneidenträger 12. Der Schneidenträger 12 weist an seinem einen Ende eine über eine Planfläche 30 überstehende, in eine von einer ebenen Gegenfläche 62 begrenzte Aufnahme 40 des Schafts 10 einführbare, mittels Spannschrauben 72 festklemmbare Querrippe 32 auf. Um auch bei kleinen Bohrdurchmessern eine ausreichende Drehmomentübertragung gewährleisten zu können, wird gemäß der Erfindung vorgeschlagen, dass die Aufnahme zwei durch einen Zentralspalt 60 voneinander getrennte, zweizählig drehsymmetrisch bezüglich der Werkzeugachse 13 zueinander angeordnete, über die Gegenfläche 62 des Schafts 10 im Wesentlichen achsparallel überstehende Mitnehmerpartien 64',64" aufweist, die jeweils eine in Drehrichtung des Schafts 10 weisende achsparallele Mitnehmerfläche 66',66" für eine benachbarte Querrippenpartie 32',32" aufweisen. Die Querrippenpartie 32',32" weist auf ihrer der Mitnehmerfläche 66',66" der einen Mitnehmerpartie 64',64" abgewandten Seite eine Spanabführfläche 20',20" auf. Die Spannschrauben 72 greifen durch je eine Querbohrung 70 in einer der Mitnehmerpartien 64',64" hindurch in eine Gewindebohrung 74 der benachbarten Querrippenpartie 32',32" ein. Zusätzlich wird über die Spannschrauben 72 eine Planflächenverspannung zwischen der Stirnfläche 36 der Querrippe 32 und der Gegenfläche 62 der Aufnahme 40 erzeugt.

## Patentansprüche

1. Werkzeug für Werkzeugmaschinen mit einem Schaft (10) und einem stirnseitig am Schaft (10) abnehmbar angeordneten, vorzugsweise als Bohrkrone ausgebildeten Schneidenträger (12), der an seinem einen Ende eine über eine Planfläche (30) überstehende, in eine von einer ebenen Gegenfläche (62) begrenzte Aufnahme (40) des Schafts (10) einführbare, mittels Spannschrauben (72) festklemmbare Querrippe (32) sowie einen in ein zentrales Passloch (42) des Schafts einsteckbaren, über die Querrippe (32) achszentral überstehenden Zentrierzapfen (38) aufweist, wobei der Schneidenträger (12) und der Schaft (10) je zwei ineinander übergehende, vorzugsweise wendelförmige Spanabführnuten (20,22) aufweisen, **dadurch gekennzeichnet, dass** die Aufnahme (40) zwei durch einen Zentralspalt (60) voneinander getrennte, zweizählig drehsymmetrisch bezüglich der Werkzeugachse (13) zueinander angeordnete, über die Gegenfläche (62) des Schafts (10) im Wesentlichen achsparallel überstehende Mitnehmerpartien (64',64") aufweist, die jeweils eine in Drehrichtung des Schafts (10) wirkende achsparallele Mitnehmerfläche (66',66") für eine benachbarte Querrippenpartie (32',32"), eine an diese spitzwinklig anschließende, als Teil des Spanabführkanals (22) ausgebildete konkave Spanabführfläche (22',22") und eine die Mitnehmerfläche (66',66")und die Spanabführfläche (22',22") radial außen miteinander verbindende, zur Werkzeugachse (13) vorzugsweise konzentrische teilzylindrische Außenfläche (68',68") aufweisen, dass die Querrippenpartie (32',32") auf ihrer der Mitnehmerfläche (66',66") der einen Mitnehmerpartie (64',64") abgewandten Seite eine an der konkaven Spanabführfläche (22',22") der anderen Mitnehmerpartie (64',64") anschließende und sich mit dieser ergänzende, als Teil des Spanabführkanals (20,22) ausgebildete konkave Spanabführfläche (20',20") aufweist, und dass die Spannschrauben (72) durch je eine Querbohrung (70) in einer der Mitnehmerpartien (64',64") hindurch in eine Gewindebohrung (74) der benachbarten Querrippenpartie (32',32") eingreifen.

2. Werkzeug nach Anspruch 1, **dadurch gekennzeichnet, dass** die Querbohrungen (70) einen Innenkonus aufweisen, in welchen die einen konischen Senkkopf (72') aufweisenden Spannschrauben (72) unter Erzeugung einer Planflächenverspannung zwischen einer Stirnfläche (36) der Querrippe (32) und der Gegenfläche (62) der Aufnahme (40) einziehbar sind.

3. Werkzeug nach Anspruch 1 oder 2, **dadurch gekennzeichnet, dass** der Schneidenträger (12) im Bereich seiner Spanfördernuten (20) je eine Aussparung (19) für eine Wendeschneidplatte (14,16) aufweist.

4. Werkzeug nach einem der Ansprüche 1 bis 3, **dadurch gekennzeichnet, dass** der Schneidenträger (12) eine Zentralbohrung (24) zur Aufnahme eines axial überstehenden Zentrierbohrers (26) aufweist.

5. Werkzeug nach einem der Ansprüche 1 bis 4, **dadurch gekennzeichnet, dass** der Schneidenträger (12) mit einem an der Querrippe (32) achszentral überstehenden Passzapfen (38) in eine Passbohrung (42) des Schafts eingreift.

6. Werkzeug nach Anspruch 5, **dadurch gekennzeichnet, dass** der Passzapfen (38) eine zum Zentrierbohrer (26) führende, über den Schaft (10) mit Kühlschmiermittel beaufschlagbare Zentralbohrung (76) aufweist.

7. Werkzeug nach einem der Ansprüche 1 bis 6, **dadurch gekennzeichnet, dass** die Mitnehmerpartien (64',64") und der Schneidenträger (12) miteinander kommunizierende, über den Schaft mit Kühlschmiermittel beaufschlagbare Bohrungen (78,80) aufweisen.

8. Werkzeug nach einem der Ansprüche 1 bis 7, **dadurch gekennzeichnet, dass** der Zentrierbohrer (26) über eine schräg in den Schneidenträger eingreifende Stellschraube (27) axial positionierbar und über mindestens eine Querschraube (28) am Schneidenträger (12) fixierbar ist.

9. Werkzeug nach einem der Ansprüche 1 bis 8, **dadurch gekennzeichnet, dass** der Schneidenträger (12) im Bereich seiner teilzylindrischen Umfangsfläche (48) in axialem Abstand von seiner Stirnfläche (31) zwei in einem Winkelabstand ≠ 180° angeordnete, radial überstehende Führungselemente (54) aufweist.

10. Werkzeug nach Anspruch 9, **dadurch gekennzeichnet, dass** die Führungselemente (54) über Zweigbohrungen (82) im Schneidenträger (12) mit Kühlschmiermittel beaufschlagbar sind.

## Claims

1. A tool for machine tools having a shank (10) and a cutting-edge carrier (12), which is arranged removably at the end side of the shank (10), is preferably designed as a drill bit and at one end has a transverse rib (32), which projects beyond a flat surface (30), can be introduced into a receiving part (40), delimited by a planar mating surface (62), of the shank (10) and can be clamped fixedly in place by means of tightening screws (72), and a centering pin (38), which can be fitted into a central locating hole (42) in the shank and projects axially centrally beyond the transverse rib (32), the cutting-edge carrier (12) and the shank (10) each having two chip removal grooves (20, 22) which merge into one another and are preferably helical, **characterized in that** the receiving part (40) has two driver parts (64', 64"), which are separated from one another by a central gap (60), are arranged with double rotational symmetry with respect to one another about the tool axis (13), project in a substantially axially parallel manner beyond the mating surface (62) of the shank (10) and each have an axially parallel driver surface (66', 66"), acting in the direction of rotation of the shank (10), for an adjacent transverse rib part (32', 32"), a concave chip removal surface (22', 22"), which adjoins the driver surface at an acute angle and is designed as part of the chip removal flute (22), and a part-cylindrical outer surface (68', 68"), which connects the driver surface (66', 66") and the chip removal surface (22', 22") to one another on the radially outer side and is preferably concentric with respect to the tool axis (13), **in that** the transverse rib part (32', 32"), on its side remote from the driver surface (66', 66") of the one driver part (64', 64"), has a concave chip removal surface (20', 20"), which adjoins the concave chip removal surface (22', 22") of the other driver part (64', 64"), is complemented by it and is designed as part of the chip removal flute (20, 22), and **in that** the tightening screws (72) engage, through in each case one transverse bore (70) in one of the driver parts (64', 64"), into a threaded bore (74) in the adjacent transverse rib part (32', 32").

2. The tool as claimed in claim 1, **characterized in that** the transverse bores (70) have an inner cone, into which the tightening screws (72), which have a conical countersunk head (72'), can be drawn, so as to produce flat-surface clamping between an end face (36) of the transverse rib (32) and the mating surface (62) of the receiving part (40).

3. The tool as claimed in claim 1 or 2, **characterized in that** the cutting-edge carrier (12), in the region of its chip removal grooves (20), has in each case a cutout (19) for a disposable cutting tool tip (14, 16).

4. The tool as claimed in one of claims 1 to 3, **characterized in that** the cutting-edge carrier (12) has a central bore (24) for receiving an axially projecting center drill (26).

5. The tool as claimed in one of claims 1 to 4, **characterized in that** the cutting-edge carrier (12) engages in a locating bore (42) in the shank by way of a locating pin (38) which projects axially centrally on the transverse rib (32).

6. The tool as claimed in claim 5, **characterized in that** the locating pin (38) has a central bore (76) which leads to the center drill (26) and can be supplied with coolant via the shank (10).

7. The tool as claimed in one of claims 1 to 6, **characterized in that** the driver parts (64', 64") and the cutting-edge carrier (12) have bores (78, 80) which are in communication with one another and can be supplied with coolant via the shank.

8. The tool as claimed in one of claims 1 to 7, **characterized in that** the center drill (26) can be positioned in the axial direction by way of a setscrew (27) which engages obliquely into the cutting-edge carrier, and can be fixed on the cutting-edge carrier (12) by way of at least one transverse screw (28).

9. The tool as claimed in one of claims 1 to 8, **characterized in that** the cutting-edge carrier (12), in the region of its part-cylindrical circumferential surface (48), has, at an axial distance from its end face (31), two radially projecting guide elements (54) arranged at an angle spacing ≠ 180°.

10. The tool as claimed in claim 9, **characterized in that** the guide elements (54) can be supplied with coolant via branch bores (82) in the cutting-edge carrier (12).

## Revendications

1. Outil pour machines-outils, comprenant un fût (10) et un porte-tranchants (12) qui est disposé frontalement sur ledit fût (10), de manière amovible, est de préférence réalisé sous la forme d'une couronne de perçage et possède, à l'une de ses extrémités, une nervure transversale (32) faisant saillie au-delà d'une surface plane (30), pouvant être insérée dans un logement (40) du fût (10) délimité par une surface complémentaire plane (62), et pouvant être fermement bloquée au moyen de vis de serrage (72), ainsi qu'un tenon de centrage (38) pouvant être emboîté dans un trou central d'ajustement (42) du fût et faisant saillie axialement au centre de la nervure transversale (32), le porte-tranchants (12) et le fût (10) étant respectivement munis de deux rainures (20, 22) d'évacuation de copeaux, de préférence hélicoïdales et fusionnant l'une dans l'autre, **caractérisé par le fait que** le logement (40) présente deux parties d'entraînement (64', 64") qui sont séparées l'une de l'autre par un interstice central (60), sont mutuellement agencées avec symétrie de révolution à deux chiffres vis-à-vis de l'axe (13) de l'outil, dépassent pour l'essentiel parallèlement à l'axe, au-delà de la surface complémentaire (62) du fût (10), et comprennent respectivement une surface d'entraînement (66', 66") parallèle à l'axe, agissant dans la direction de rotation du fût (10) et affectée à une partie de nervure transversale (32', 32") voisine, une surface concave (22', 22") d'évacuation de copeaux, se rattachant à angle aigu à la partie précitée et réalisée en tant que partie constitutive du canal (22) d'évacuation de copeaux, et une surface extérieure (68', 68") partiellement cylindrique, de préférence concentrique à l'axe (13) de l'outil et reliant l'une à l'autre, à l'extérieur dans le sens radial, ladite surface d'entraînement (66', 66") et ladite surface (22', 22") d'évacuation de copeaux ; **par le fait que** la partie de nervure transversale (32', 32") comporte, sur son côté tourné à l'opposé de la surface d'entraînement (66', 66") de l'une des parties d'entraînement (64', 64"), une surface concave (20', 20") d'évacuation de copeaux qui se rattache à la surface concave (22', 22") d'évacuation de copeaux de l'autre partie d'entraînement (64', 64"), en étant complétée par cette dernière pour matérialiser une partie du canal (20, 22) d'évacuation de copeaux ; et **par le fait que** les vis de serrage (72) traversent un alésage transversal respectif (70), pratiqué dans l'une des parties d'entraînement (64', 64"), pour pénétrer dans un trou taraudé (74) de la partie de nervure transversale (32', 32") voisine.

2. Outil selon la revendication 1, **caractérisé par le fait que** les alésages transversaux (70) présentent un cône intérieur dans lequel les vis de serrage (72), pourvues d'une tête conique fraisée (72'), peuvent être insérées avec génération d'un ablocage superficiel à plat entre une face frontale (36) de la nervure transversale (32) et la surface complémentaire (62) du logement (40).

3. Outil selon la revendication 1 ou 2, **caractérisé par le fait que** le porte-tranchants (12) possède, dans la région de ses rainures (20) d'évacuation de copeaux, un évidement respectif (19) destiné à une platine de coupe réversible (14, 16).

4. Outil selon l'une des revendications 1 à 3, **caractérisé par le fait que** le porte-tranchants (12) est muni d'un alésage central (24) conçu pour recevoir un foret de centrage (26) faisant saillie axialement.

5. Outil selon l'une des revendications 1 à 4, **caractérisé par le fait que** le porte-tranchants (12) pénètre, par un tenon d'ajustement (38) saillant axialement au centre de la nervure transversale (32), dans un alésage d'ajustement (42).

6. Outil selon la revendication 5, **caractérisé par le fait que** le tenon d'ajustement (38) comporte un alésage central (76) menant au foret de centrage (26) et pouvant être sollicité, par l'intermédiaire du fût (10), par un agent lubrifiant de refroidissement.

7. Outil selon l'une des revendications 1 à 6, **caractérisé par le fait que** les parties d'entraînement (64', 64") et le porte-tranchants (12) présentent des alésages (78, 80) en communication mutuelle et pouvant être sollicités, par l'intermédiaire du fût, par un agent lubrifiant de refroidissement.

8. Outil selon l'une des revendications 1 à 7, **caractérisé par le fait que** le foret de centrage (26) peut être positionné axialement par l'intermédiaire d'une vis de réglage (27) pénétrant à l'oblique dans le porte-tranchants, et peut être consigné à demeure, sur ledit porte-tranchants (12), par l'intermédiaire d'au moins une vis transversale (28).

9. Outil selon l'une des revendications 1 à 8, **caractérisé par le fait que** le porte-tranchants (12) possède dans la région de sa surface périphérique (48) partiellement cylindrique, à distance axiale de sa face extrême (31), deux éléments de guidage (54) faisant saillie dans le sens radial et agencés selon un espacement angulaire # 180°.

10. Outil selon la revendication 9, **caractérisé par le fait que** les éléments de guidage (54) peuvent être sollicités, par un agent lubrifiant de refroidissement, par l'intermédiaire d'alésages de bifurcation (82) pratiqués dans le porte-tranchants (12).
